# EUROPEAN PATENT SPECIFICATION

(11) **EP 0 870 650 B1**
(45) Date of publication and mention of the grant of the patent: **30.07.2003**
(21) Application number: 98106506.3
(22) Date of filing: 08.04.1998
(51) Int. Cl.: B60R 19/18, B21D 7/08

(54) **Apparatus and method for making an automotive bumper beam**
Einrichtung und Methode zur Herstellung von Kraftfahrzeug-stossstangenträgern
Dispositif et procédé permettant de fabriquer des poutres de pare-choc pour véhicules

(30) Priority: 10.04.1997 KR 9713280; 10.04.1997 KR 9713283
(43) Date of publication of application: 14.10.1998
(73) Proprietor: HYUNDAI MOTOR COMPANY, Jongro-ku, Seoul (KR); Sung Woo Metal Co., Ltd., Kijang-kun, Pusan-si (KR)
(72) Inventor: Lee, Yong-ho, Kyungju-si, Kyungsangbuk-do (KR); Lee, Mun-yong, Kijang-kun, Pusan-si (KR)
(74) Representative: Viering, Jentschura & Partner

(56) References cited:
- DD-A- 146 794
- GB-A- 1 204 916
- US-A- 4 354 372
- US-A- 4 530 226
- US-A- 5 561 902
- US-A- 5 566 874
- PATENT ABSTRACTS OF JAPAN vol. 006, no. 048 (M-119), 27 March 1982 (1982-03-27) & JP 56 163031 A (HITACHI METALS LTD), 15 December 1981 (1981-12-15)

## Description

The present invention relates to an apparatus and method for making an automotive bumper beam and, more particularly, to an apparatus and method which can make a bumper beam by a single roll-forming process.

Generally, bumpers are mounted on front and rear sides of a vehicle to absorb the impact from collisions with other vehicles and objects. Bumpers act to decrease vehicle damage and minimize injury to persons inside the vehicle.

The bumper comprises a bumper beam mounted on the front and rear sides of the vehicle in a direction along a width of the same, an impact absorbing member provided on a front side of the bumper beam, and a bumper cover covering both the bumper beam and impact absorbing member to aesthetically conceal and protect the same.

The present invention relates to the apparatus and method for manufacturing the bumper beam. Conventionally, a bumper beam, when seen at a cross-section, includes a main body which is formed having a "W" shape with the two openings facing the vehicle, and a plate welded over the two openings such that two semi-circular tubes are formed in the bumper beam.

However, the manufacture of such a prior art bumper beam has drawbacks in that because two separate steps are needed- forming the main body and welding the plate to the main body- the process is complicated and time consuming. This ultimately acts to increase the overall manufacturing costs of the vehicle. In addition, as the plates used to cover the two openings are made through a pressing operation, much scrap is generated in forming the plates. Finally, a rim for welding the plates must be formed on the main body, further complicating the manufacturing process and increasing the overall weight of the vehicle.

To remedy these problems, a roll-forming process has come to be used in recent times in which a steel sheet is roll-formed into a tubular cross section. An example of such a manufacturing method is disclosed in U.S. Patent No. 5,092,512 to Peter Sturrus et al..

In the method of the 5,092,512 patent, a steel sheet is passed through a plurality of roll-formers to gradually change the steel sheet into a tube shape. Edges of the tube are then smoothed by passing the same through a support member. Next, joint portions are welded and the tube is provided to a sweeping member where the appropriate angles are curved, after which the tube is then cut to complete a bumper beam.

However, the above prior art roll-forming method has the drawback of being complicated. Namely, the addition of the steps of using the support member to smooth the irregular edges of the tube and passing the tube through a sweeping member to curve the tube are complicated and time consuming. because the sweeping means has internal and external mandrels.

US-A-4 530 226 discloses an apparatus for forming an elongated article, comprising a first group of roll formers for forming the profile of the elongated article, and a second group of roll formers for forming a predetermined sweep of the elongated article.

The present invention has been made in an effort to solve the above problems.

It is an object of the present invention to provide an apparatus and method for making an automative bumper beam in which a bumper beam is formed through a single roll forming process.

It is further another object of the present invention to provide an apparatus and method for making an automotive bumper beam which can reduce the spring back of sweeping.

According to the invention, this is achieved by an apparatus and a method according to the features of claims 1 and 20, respectively. Advantageous further embodiments are described in the subclaims.

The accompanying drawings, which are incorporated in and constitute a part of the specification, illustrate an embodiment of the invention, and, together with the description, serve to explain the principles of the invention:
Fig. 1 is a top schematic view of a bumper where a bumper beam made by an apparatus and method according to a preferred embodiment of the present invention may be employed;
Fig. 2 is a cross-sectional view taken along line I-I of Fig, 1;
Fig. 3 is an enlarged cross-sectional view of a bumper beam shown in Fig. 2;
Fig. 4 is a view for illustrating a bumper beam forming process realized by a method according to a preferred embodiment of the present invention;
Fig. 5 is a schematic view of an apparatus for making a bumper beam in accordance with a preferred embodiment of the present invention;
Fig. 6 is a plane view of Fig. 5;
Fig. 7 is a front view of a roll former of the apparatus depicted in Figs. 5 and 6;
Fig. 8A is a side view of the roll former shown in Fig. 7;
Fig. 8B is a partial cross-sectional view taken along line II-II of Fig. 8B;
Fig. 9 is a side view of a first sweep former depicted in Figs. 5 and 6;
Fig. 10 is a side view of a second sweep former depicted in Figs. 5 and 6;
Fig. 11 is a perspective view of shape adjusting means depicted in Figs. 5 and 6; and
Fig. 12 is a schematic view of an apparatus for making a bumper beam in accordance with another preferred embodiment of the present invention.

Preferred embodiments of the present invention will now be described in detail with reference to the accompanying drawings.

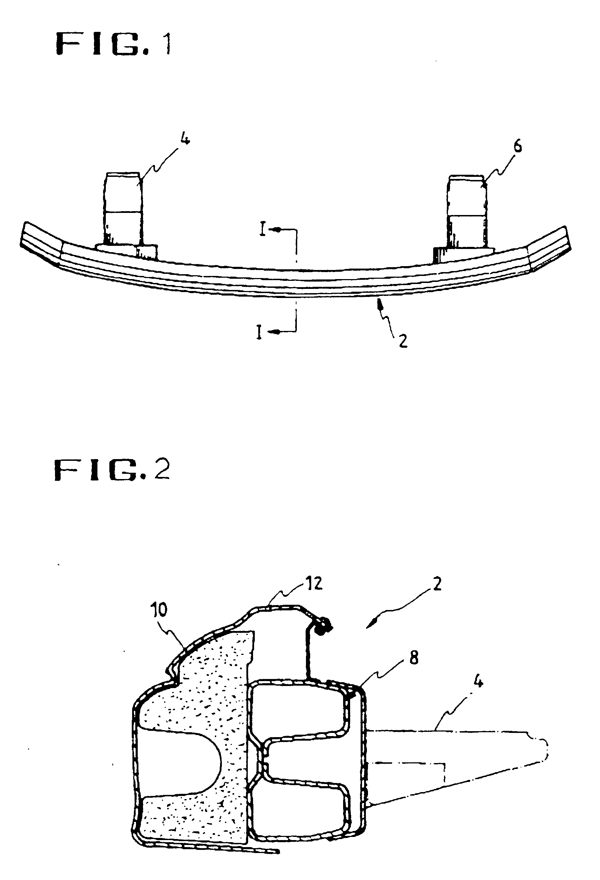

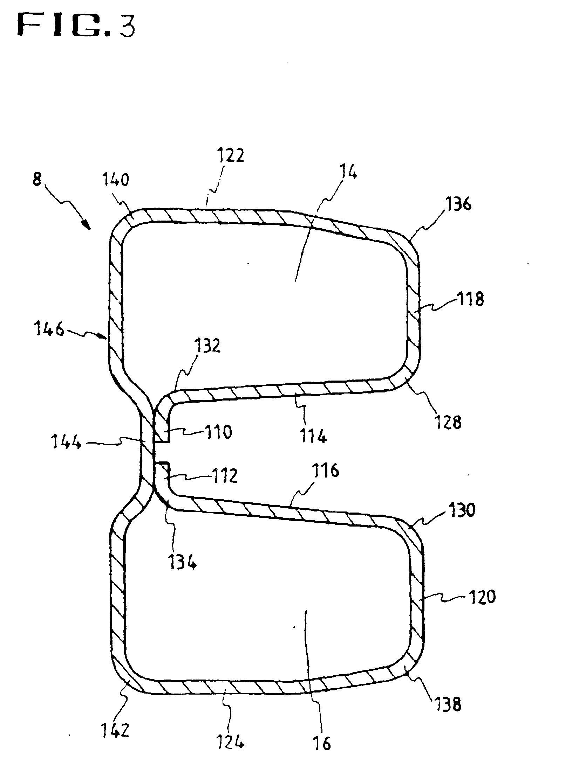

Referring to Figs. 1 and 2, a bumper asseinbly 2 typically comprises a bumper beam 8, a bumper cover 12 covering the bumper beam 8, an impact absorbing member 10 disposed between one inner wall of the bumper cover 12 and the bumper beam 8, and stays 4 and 6 integrally formed substantially perpendicular to the bumper beam cover 12 and through which the bumper assembly 2 is mounted to front and rear walls of a vehicle along a width of the same.

As shown in Fig. 3, the bumper beam 8 is substantially integral tube-shape.

More in detail, the bumper beam 8 comprises a front wall 146 having an indented central portion 144; a top wall 122, one end of which is connected to an upper end of the front wall 146 by a first boundary bend 140; an upper rear wall 118, an upper end of which is connected to the other end of the top wall 122 by a second boundary bend 136; an upper inner wall 114, one end of which is connected to a lower end of the upper rear wall 118 by a third boundary bend 128; an upper flange 110 connected to the upper inner wall 114 by a fourth boundary bend 132; a bottom wall 124, one end of which is connected to a lower end of the front wall 146 by a fifth boundary bend 142; a lower rear wall 120, a lower end of which is connected to the other end of the bottom wall by a sixth boundary bend 138; a lower inner wall 116, one end of which is connected to an upper end of the lower rear wall 120 by a seventh boundary bend 130; and a lower flange 112 connected to the lower inner wall 116 by an eighth boundary bend 134.

The upper and lower flanges 110 and 112 are welded to the indented central portion 144 of the front wall 146.

Therefore, an upper chamber 14 is defined by the front, top, upper rear, and upper inner walls 146, 122, 118 and 114; and a lower chamber 16 is defined by the front, bottom, lower rear, and lower inner walls 146, 124, 120 and 116.

An apparatus for making the bumper beam 8 structured as in the above will be described hereinafter.

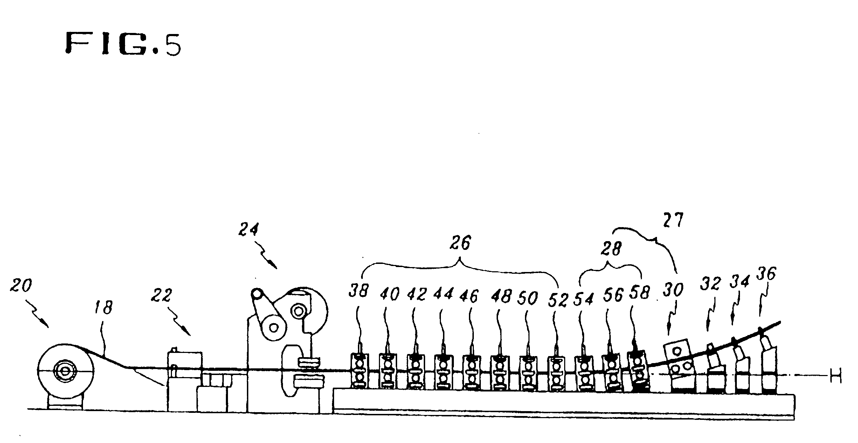

Referring to Fig. 5, the apparatus comprises an uncoiler 20 and a straightener 22, the straightener flattening the bumper beam material 18 unrolled by the uncoiler 20.

The apparatus further comprises a brake press 24 for forming various holes on the bumper beam material 18 directed from the straightener 22. The various holes are required when assembling a finished bumper assembly 2.

The uncoiler 20, straightener 22, and brake press 24 all act to feed the bumper beam material 18 through the rest of the roll forming apparatus.

The apparatus further comprises a first group of roll formers 26. The bumper beam material 18 fed through the brake press 24 is gradually bent to be formed having the tube shape as shown in Fig. 3 while passing through the first group of roll formers 26 comprising a plurality of roll formers 38, 40, 42, 44, 46, 48, 50, and 52. The roll formers 38, 40, 42, 44, 46, 48 and 52 of the first group 26 are arranged such that base planes of each roll former of the first group 26, through which the indented central base portion 144 of the bumper beam 8 passes, are disposed on an identical horizontal plane H.

The apparatus further comprises a second group of roll formers 27 having a first portion 28 including a plurality of sweep roll formers 54, 56, and 58 and second portion with a final sweep roll former 30. After being passed through the first group of roll formers 26, the bumper beam material 18 is fed through the second group of roll formers 27 to be formed having a sweep.

The sweep roll formers 54, 56 and 58 of the first portion 28 of the second group of the roll formers 27 are arranged such that each base plane, through which the indented central portion 144 of the bumper beam 8 passes, thereof has a predetermined angle with respect to the horizontal plane H.

More in detail, the sweep roll formers 54, 56 and 58 are progressively arranged in an upward position and in a larger angle with respect to the horizontal plane H. Therefore, the bumper beam material 18 is formed having a first sweep while passing through the roll formers 54, 56 and 58.

The bumper beam material 18 is then passed through a final sweep roll former 30 which continues the shaping of the bumper beam material 18, and next to an adjustor 32 which adjusts the shape into accurate dimensions needed for the bumper beam 8 as shown in Fig. 3.

The final sweep roll former 30 is arranged such that a base plane thereof, through which the indented central portion 144 of the bumper beam 8 passes, has a predetermined angle, preferably larger than the angle between the base plane of the roll former 58 and the horizontal plane H, with respect to the horizontal plane H. In accordance with the present invention, the bumper beam material 18 is pre-sweeped by the sweep roll formers 54, 56 and 58 of the first portion 28 of the second group of roll formers 27 in advance, and then completely sweeped by the final sweep roll former 30 in predetermined curvature, because sweeping a bumper beam material 18 at once causes spring back.

Next, the bumper beam material 18 is fed to a welding member 34, which welds the upper and lower flanges 110 and 112 of the bumper beam 8 to the indented central portion 144 of the front wall 146 (see Fig. 3), and is cut to a predetermined length by a cutting member 36 to complete the formation of the bumper beam 8.

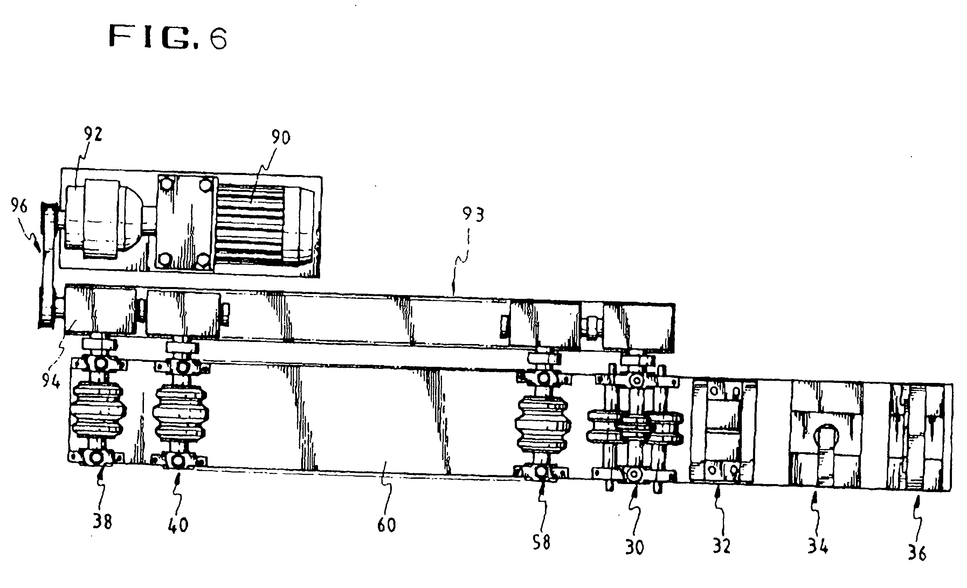

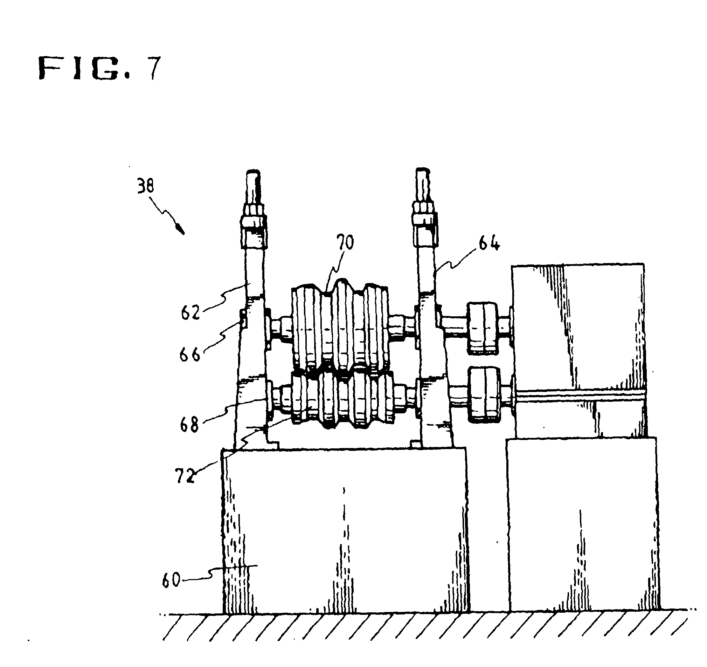

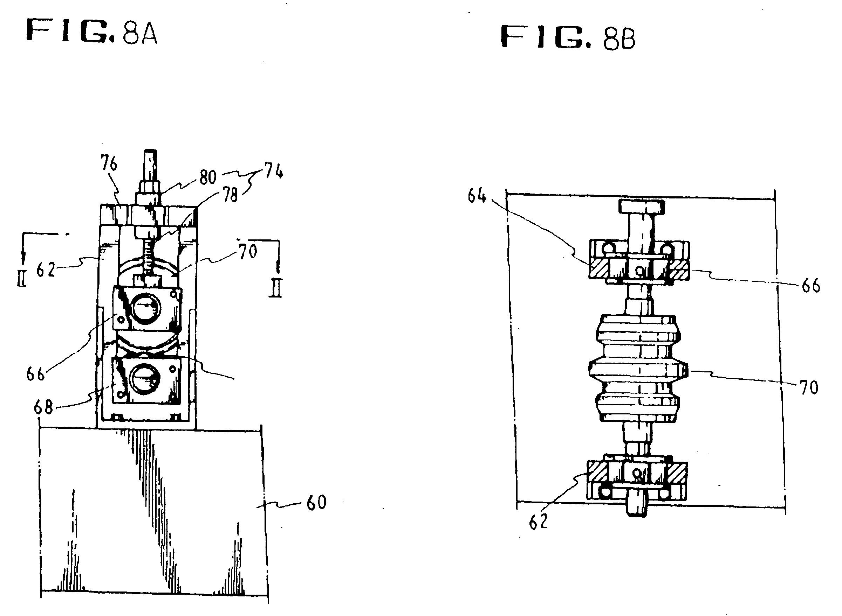

Referring to Fig. 6, the roll formers 38, 40, 42, 44, 46, 48, 50, 52, 54, 56, 58 are aligned successively on a base plate 60. Although a shape of each roll former 38-58 differs slightly, the basic construction thereof is similar. Accordingly, only one roll former 38 will be described more in detail hereinafter with reference to Figs. 7 and 8.

As shown in the drawings, the roll former 38 comprises support members 62 and 64 mounted vertically at a predetermined interval from each other on the base plate 60, upper and lower roller members 70 and 72 arranged between the support members 62 and 64 with upper and lower axle supporting members 66 and 68 interposed therebetween, and a height adjusting member 74 mounted to the upper axle supporting member 66 and which adjusts the height of the upper roller 70.

As shown in Fig. 8A, a center portion of the supporting members 62 is hollow, the hollow portion extending almost to a bottom thereof, and the axle supporting members 66 and 68 for supporting the upper and the lower rollers are mounted on the side wall of the supporting members 62 and 64 in the hollow portions. The axle supporting members 66 and 68 are fixed with the supporting members 62 and 64 using a dovetail method, and the upper axle supporting member 66 moves up and down by the height adjusting member 74.

The height adjusting member 74 comprises a screw rod 78 passing through a horizontal member 76 and at a bottom end of which the upper axle supporting member 66 is connected, and a nut 80 connected to the screw rod 78 such that the height of the upper axle supporting member 66 can be adjusted by turning the screw rod 78 as needed according to the thickness of the bumper beam material 18 (see Fig. 5).

The roll formers 54, 56 and 58 of the first portion 28 of the second group of roll formers 27 are similar in structure to the above described roll former 38 but their height is increasingly raised toward a direction in which the bumper beam material 18 passes through the roll forming apparatus.

In addition, to form a sweep on the bumper beam 8, the roll formers 54, 56 and 58 are disposed such that their vertical axis are increasingly inclined toward a direction opposite to a bumper beam advancing direction

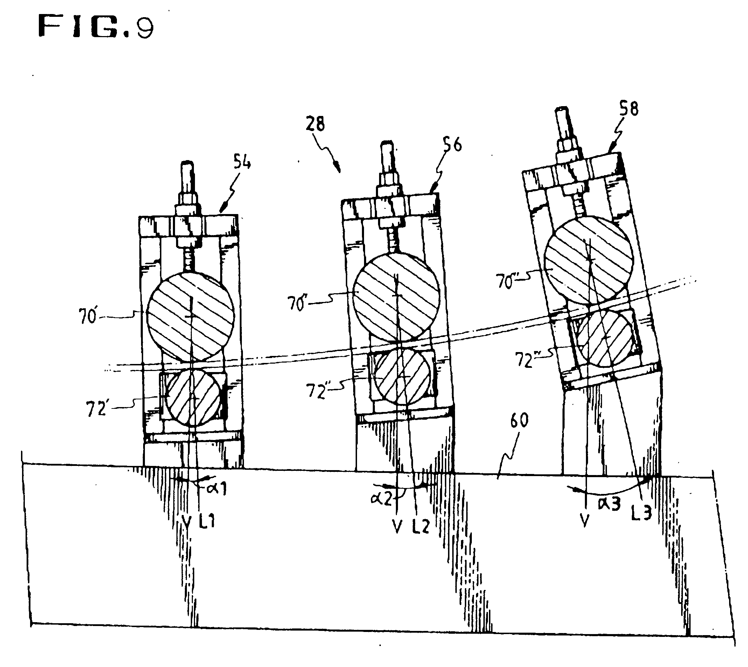

More in detail, with reference to Fig. 9, a line L1 connecting a rotating axis of an upper roller member 70' to a rotating axis of a lower roller member 72' becomes the vertical axis of the roll former 54; a line L2 connecting a rotating axis of an upper roller member 70" to a rotating axis of a lower roller member 72" becomes the vertical axis of the roll former 56; and a line L3 connecting a rotating axis of an upper roller member 70"' to a rotating axis of a lower roller member 72''' becomes the vertical axis of the roll former 58.

In addition, a first angle α1 between a vertical line V and the line L1 is designed to be smaller than a second angle α2 between the vertical line V and the line L2, which is less than a third angle α3 between the vertical line V and the line L3.

Accordingly, the bumper beam material 18 is smoothly curved while passing through the first portion 28 of the second group of roll formers 27. Here, although the first portion 28 of the second group of roll formers 27 comprises three roll formers 54, 56, and 58, the present invention is not limited to this number and more roll formers can be used.

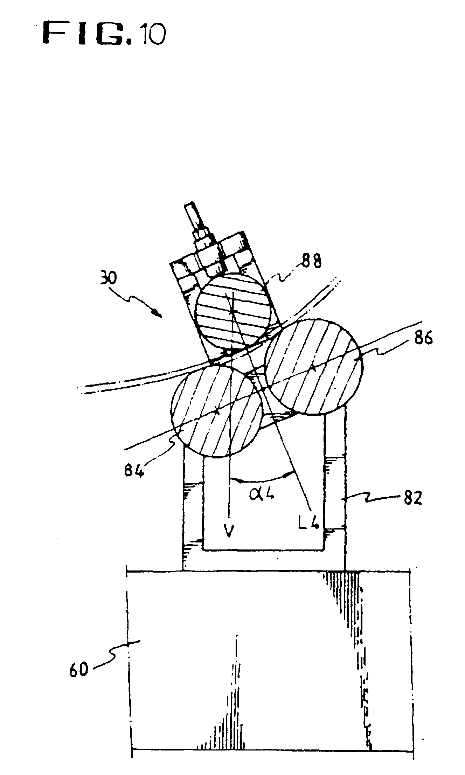

Referring to Fig. 10, the final sweep roll former 30 comprises a supporting member 82 mounted on the base plate 60, first and second lower rollers 84 and 86 mounted on the supporting member 82, and an upper roller 88 arranged over the lower rollers 84 and 86 at a central position therebetween. The level of curvature of the bumper beam material 18 is controlled by the arrangement of the second lower roller 86 and the upper roller 88.

The final sweep roll former 30 is disposed such that a plane between the upper roller 88 and the lower rollers 84 and 86 can be formed higher than that between the upper roller 70''' and lower roller 72''' of the roll former 58 (see Fig 9). A vertical axis of the final sweep roll former 30 is also inclined toward the direction opposite to a bumper beam advancing direction.

More in detail, when a line L4 connecting a rotating axis of the upper roller 88 to a mid-point on a line, connecting a rotating axis of the first lower roller 84 to a rotating axis of the second lower roller 86 becomes the vertical axis, a fourth angle α4 is formed between the vertical line and the line L4. The angle α4 is larger than the third angle α3 (see Fig. 9).

To drive the first and second groups of roll formers 26 and 27, a motor 90, as shown in Fig. 6, is provided to generate driving force which is input to a reduction device 92. The reduction device 92 converts the drive force of the motor 90 into a low speed before output to the first and second groups of roll formers 26 and 27.

After being transferred to the reduction device 92. the drive power is supplied to a power transmission apparatus 93 via a transmission belt 96. The power transmission apparatus 93 includes a plurality of power transmission devices 94 connected to each of the roll formers 38∼58 to supply the drive power to the same. The transmission belt 96 is connected directly to the power transmission device 94 connected to the roll former 38.

Although a belt is used as the transmission belt 96, the present invention is not limited to this configuration and it is possible to use a chain or other means for connection with the reduction device 92

The power transmission device 94 is provided to each roll former 38∼58 and to the final sweep roll former 30. The power transmission devices 94 of the roll formers 38∼58 and the sweep roll former 30 are connected to each other such that each roll former 38∼58 and the final sweep roll former 30 receive the same rotative speed from the power transmission devices 94. Here, it is possible to use any means able to provide identical rotational speeds to each roll former 38-58 and to the final sweep roll former 30, and the present invention is not limited to the configuration illustrated in the drawings.

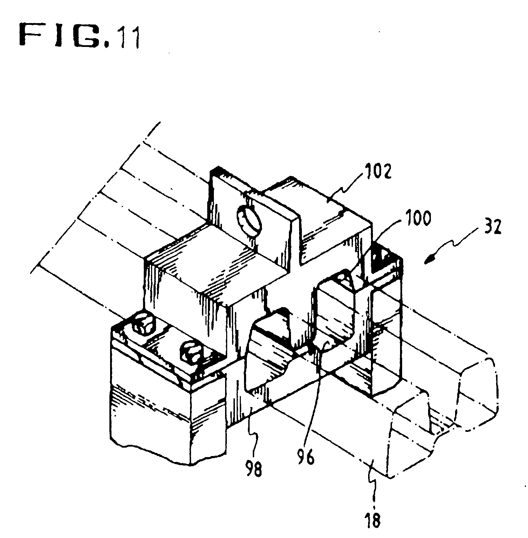

The bumper beam material 18 passed through the final sweep roll former 30 is adjusted to the final shape required by passing through the shape adjustor 32. As shown in Fig. 11, the shape adjustor 32 comprises a lower die 98 having an adjusting hole 96 substantially corresponding to a shape of a front wall of the bumper beam 8, and an upper die 102 fixedly connected to the lower die 98 and having an adjusting hole 100 substantially corresponding to a shape of rear and inner walls of the bumper beam 8. After passing through the shape adjustor 32, the forming of the shape of the bumper beam material 18 is complete.

Next, the upper and lower flanges 110 and 112 of the bumper beam material 18 are welded to the indented central portion 144 of the front wall 146 by the welding member 34 (see Figs. 5 and 6) such that the bumper beam material 18 is fixed in a cross-sectional shape as shown in Fig. 3. In the present invention, the welding member 34 uses high frequencies to weld the upper and lower flanges 110 and 112 of the bumper beam material 18 to the indented central portion 144 of the front wall 146. As this type of welding device is well known, a detailed description thereof will be omitted herein.

As the final process, the completely formed bumper beam material 18 is cut to a predetermined length by the cutting device 36 of Figs. 5 and 6, the predetermined length of the bumper beam material 18 being determined by the width of the vehicle. After the bumper beam material 18 is cut, the bumper beam 8 is completed. Here, any type of device which can cleanly cut the bumper beam material 18 can be used as the cutting device 36.

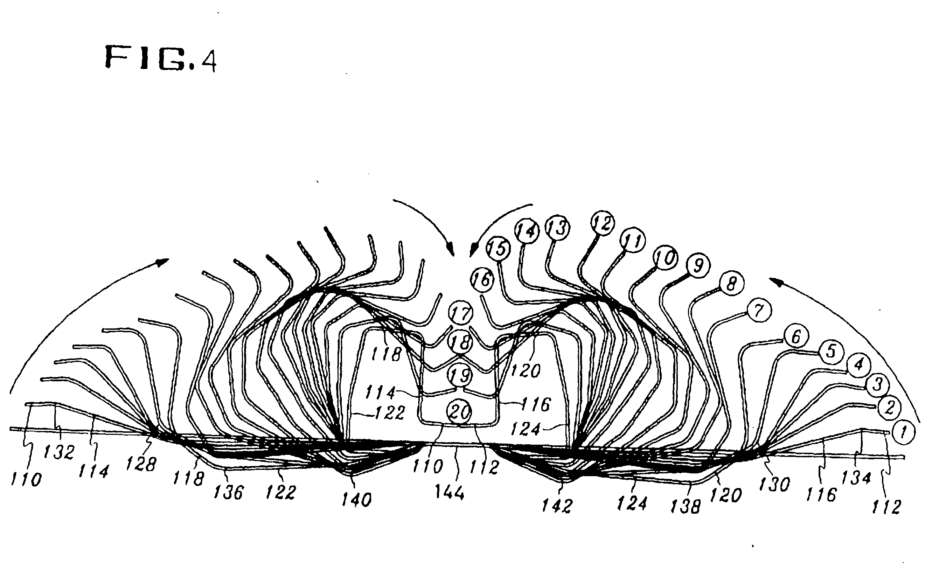

The process of manufacturing the bumper beam 8 using the roll forming apparatus shown in Fig. 5 and structured as in the above will now be described in detail with reference to Figs. 3 and 4.

First, the upper and lower inner walls 114 and 116 respectively having the upper and lower flanges 110 and 112 are formed. Next, the upper and lower rear walls 118 and 120 are formed having a predetermined length by bending third and seventh boundary bends 128 and 130 upward, respectively, and the top and bottom walls 122 and 124 are formed having a predetermined length by bending the second and sixth boundary bends 136 and 138, upward respectively.

In the step for forming the inner walls 114 and 116 having the flanges 110 and 112, respectively, each boundary bend 128 and 130 between the upper and lower rear walls 118 and 120 and the inner walls 114 and 116 is gradually bent inward and, at the same time, each flange 110 and 112 is bent outward through approximately 5 steps.

The inner walls 114 and 116 and the top and bottom walls 122 and 124 are not completed in the step forming the inner walls 114 and 116 and the flanges 110 and 112, but are gradually bent inward at the second, sixth, first, and fifth boundary bends 136. 138, 140 and 142.

After forming the inner walls 114 and 116 having the flanges 110 and 112, respectively, the second and sixth boundary bends 136 and 138 between the upper and lower rear walls 118 and 120 and the top and bottom walls 122 and 124, and the first and fifth boundary bends 140 and 142 between the top and bottom walls 122 and 124 and the front wall 146 are gradually bent at the same time. Each central portion of the top and bottom walls 122 and 124 is formed having an inward wide obtuse angle through the step as shown in Fig. 3.

Through the steps, the boundary bends 128, 130, 136, 138, 140 and 142, are bent inward such that the flanges 110 and 112 face the indented central portion 144 of the front wall 146 to result in forming the bumper beam having the upper and lower chambers 14 and 16. The upper and lower flanges 110 and 112 are then welded to the indented central portion 144.

Accordingly, in the present invention, the complicated step of welding a separate plate as in the prior art is avoided.

The front wall 146 is structured having the indented central portion 144 so as to provide additional strength against impact to the bumper 8. This formation is realized progressively during the steps of forming the upper and lower rear walls 118 and 120 and the top and bottom walls 122 and 124.

In forming each wall of the chambers 14 and 16, all the walls are bent gradually at the same time, while the flanges 110 and 112 are bent to the top and bottom walls 122 and 124 gradually, to avoid these portions from spring-back during the final step and to decrease the load given to each roll former 38-58.

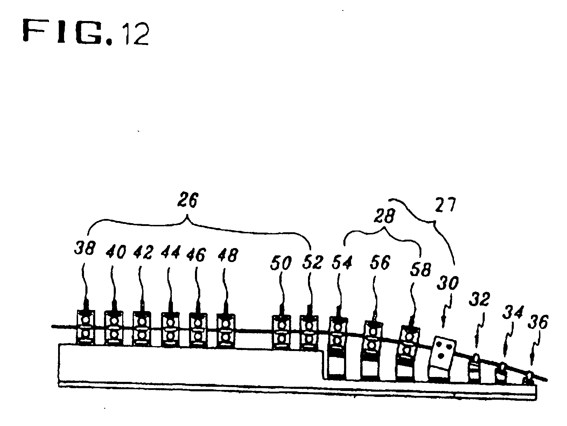

Referring now to Fig. 12, shown is a roll forming apparatus according to a second preferred embodiment of the present invention. As shown in the drawing, heights of the roll formers 54, 56, and 58 in the first portion 28 of the second group of roll formers 27 are progressively arranged lower in position. Further, the final sweep roll former 30, shape adjustor 32, welder 34 and cutting device 36 are also arranged progressively lower in height, the final sweep roll former 30 being provided lower than the last roll former 58 of the first portion 28 of the second group of roll formers 27. Here, as the operation of the roll forming apparatus is identical to that of the first embodiment, an explanation thereof will be omitted herein.

In the preferred embodiments of the present invention, although the first portion 28 of the second group of roll formers 27 immediately follows the first group of roll formers 26, the present invention is not limited to this configuration and it is possible to add a welding means between the roll forming means and the first sweep forming means.

In this disclosure, there is shown and described only the preferred embodiment of the invention, but, as aforementioned, it is to be understood that the invention is capable of use in various other combinations and environments and is capable of changes or modification within the scope of the inventive concepts as expressed herein.

## Claims

1. An apparatus for making an automotive bumper beam (8) having an integral tube-shape in sectional view and a base plane, said apparatus comprising:
a first group of roll formers (26) for forming the integral tube-shape, in sectional view, of the bumper beam (8), said first group of roll formers (26) having a plurality of roll formers (38, 40, 42, 44, 46, 48, 50, 52) through which a bumper beam material (18) successively passes, said roll formers (26) of the first group being successively aligned in a line and having roll planes, through which the base plane of the bumper beam (8) passes, disposed on an identical horizontal line; and
a second group of roll formers (27) having a first portion (28) with a plurality of sweep roll formers (54, 56, 58) for forming a predetermined sweep of said integral tube, and a second portion with a final sweep roll former (30) for forming a final sweep of said integral tube sweeped by the roll formers (54, 56, 58) of said first portion (28) of the second group of roll formers (27), whereby spring-back effect is avoided, said bumper beam (8) provided from the first group of roll formers (26) successively passing through said sweep roll formers (30, 54, 56, 58) of said second group of roll formers (27), said roll formers (27) of the second group being successively aligned in the line behind the roll formers (26) of the first group and having roll planes, through which the base plane of the bumper beam (8) passes, disposed progressively upward or downward in positions with respective to the horizontal line.

2. The apparatus of claim 1, wherein each of the roll formers of the first and second groups of roll formers (26, 27) comprises:
a support member (62, 64); and
an upper roller member (70, 70', 70'', 70''') and a lower roller member (72, 72', 72'', 72''') both supported by the support member (62, 64).

3. The apparatus of claim 2, wherein each of the roll formers further comprises a height adjusting member (74) which is provided on the support member (62, 64) to adjust the height of the upper roller member (70, 70' 70'', 70''').

4. The apparatus of claim 2 or 3, wherein each extension line (L1, L2, L3) connecting each rotating axis of the upper roller members (70', 70'', 70''') to corresponding rotating axis of the lower roller members (72', 72'', 72''') of the roll formers (27) of the second group are declined to a bumper beam material advancing direction in respect with a vertical line (V).

5. The apparatus of claim 4, wherein the declined extension lines (L1, L2, L3) and the vertical lines (V) meet at increasingly larger angles (α1, α2, α3) to the bumper beam material advancing direction.

6. The apparatus of claim 1, wherein the final sweep roll former (30) comprises a supporting member (82), first and second lower rollers (84, 86) mounted on the supporting member (82), and an upper roller (88) arranged over the first and second lower rollers (84, 86) at a central position therebetween.

7. The apparatus of claim 6, wherein the final sweep roll former (30) has a roll plane positioned higher than that of the last roll former (58) of the first portion (28) of the second group.

8. The apparatus of claim 6, wherein the final sweep roll former (30) is disposed such that a plane between the upper roller (88) and the lower rollers (84, 86) is formed higher than that between the upper roller member (70', 70'', 70''') and lower roller member (72', 72'', 72''') of the roll formers of the first portion (28) of the second group.

9. The apparatus of claim 6, wherein a extension line (L4) connecting a rotating axis of the upper roller (88) and a middle point on a segment of the rotation axes of the first and second lower rollers (84, 86) declines in respect with a vertical line (V) to the bumper beam material advancing direction.

10. The apparatus of claim 3, the support members (62, 64) have center portions hollow to a bottom thereof, and upper and lower axle supporting members (66, 68) fixing over there by using a dovetail method for supporting the upper and lower roller members (70, 72) so that the upper axle supporting member (66) moves up and down by the height adjusting member (74).

11. The apparatus of claim 1, wherein the roll planes of the roll formers (27) of the second group respectively have predetermined angles with respect to the horizontal plane.

12. The apparatus of claim 11, wherein the predetermined angles are progressively increased upward.

13. The apparatus of claim 11, wherein the predetermined angles are progressively increased downward.

14. The apparatus of claim 1, wherein the roll formers (26, 27) of the first and second groups are driven by the same drive source (90).

15. The apparatus of claim 1 further comprising an uncoiler (20), a straightener (22) for flattening the steel sheet unrolled by the uncoiler (20) and a brake press (24) for forming various holes on the steel sheet directed from the straightener (22), the various holes being required when assembling a finished bumper assembly (2).

16. The apparatus of claim 15 further comprising a shape adjuster (32) for adjusting a contour and sweep of the bumper beam into a final required shape.

17. The apparatus of claim 16, wherein the shape adjuster (32) comprises a lower die (98) having an adjusting hole (96) substantially corresponding to a shape of a front wall of the bumper beam (8), and an upper die (102) having an adjusting hole substantially corresponding to a shape of rear and inner walls of the bumper beam (8), fixedly connected to the lower die (98).

18. The apparatus of claim 16 further comprising a welding device (34) for welding flanges (110, 112) to a front wall of the bumper beam material (18) provided from the shape adjuster (32).

19. The apparatus of claim 18 further comprising a cutting device (36) for cutting the bumper beam material (18) to a predetermined length.

20. A method for making an automotive bumper beam (8) with a steel sheet having side edges comprising the steps of:
a) bending the steel sheet gradually to form an integral tube shape with the side edges abutted to the front wall thereof by passing the steel sheet through a first group of roll formers (26);
b) forming a predetermined sweep of said integral tube by passing said tube through a first portion (28) of a second group of roll formers (27); and
c) forming a final sweep of said integral tube by passing said tube sweeped by said first portion (28) of the second group of roll formers (27) through a second portion of the second group of roll formers (27),
the roll planes of said second group of roll formers (27) respectively have predetermined angles with respect to the horizontal plane, said roll planes being passed through by the indented central portion of the tube and said predetermined angles progressively increasing in positive or negative.

21. The method of claim 20 further comprising the step of:
c) adjusting the shape of the tube to the real dimension of the bumper beam (8) by passing the tube sent from the step b), through a die (98, 102) having a hollow portion (100), said hollow portion having a cross sectional shape substantially corresponding to the cross sectional shape of the bumper beam (8).

22. The method of claim 21 further comprising the steps of:
d) welding said side edges to said front wall of the tube; and
e) cutting the tube sent from the step d).

23. The method of claim 22 further comprising the step of welding said side edges to said front wall of the tube upstream of said second group of roll formers (27).

24. The method of claim 20, wherein the final sweep of said integral tube has a curvature less than that of said predetermined sweep of said integral tube.

25. The method of claim 20, wherein the integral tube comprises:
an upper chamber (14) being defined by a front, top, upper rear, and upper inner walls (146, 122, 118, 114) by abutting an upper flange (110) extending from the upper inner wall (114) with a substantially right angle to the front wall (146); and
a lower chamber (16) being defined by a front, bottom, lower rear, and lower inner walls (146, 124, 120, 116) by abutting a lower flange (112) extending from the lower inner wall (116) with a substantially right angle to the front wall (146) in the opposite direction of the upper flange (110).

## Patentansprüche

1. Vorrichtung zur Herstellung eines Kraftfahrzeug-Stoßfängerträgers (8) mit einer in Schnittansicht einstückigen Rohrform und einer Basisebene, wobei die Vorrichtung aufweist:
eine erste Gruppe von Profilwalzen (26) zum Formen der in Schnittansicht einstückigen Rohrform des Stoßfängerträgers (8), wobei die erste Gruppe von Profilwalzen (26) eine Mehrzahl von Profilwalzen (38, 40, 42, 44, 46, 48, 50, 52) aufweist, durch welche ein Stoßfängerträgermaterial (18) nacheinander hindurch läuft, wobei die Profilwalzen (26) der ersten Gruppe nacheinander in einer Linie ausgerichtet sind und Walzenebenen aufweisen, durch welche die Basisebene des Stoßfängerträgers (8) hindurch läuft, die an einer identischen horizontalen Linie angeordnet ist; und
eine zweite Gruppe von Profilwalzen (27), die einen ersten Abschnitt (28) mit einer Mehrzahl von Krümmungsprofilwalzen (54, 56, 58) zum Formen einer vorbestimmten Krümmung des einstückigen Rohres und einen zweiten Abschnitt mit einer Endkrümmungsprofilwalze (30) zum Formen einer Endkrümmung des einstückigen Rohres aufweist, das mittels der Profilwalzen (54, 56, 58) des ersten Abschnitts (28) der zweiten Gruppe von Profilwalzen (27) gekrümmt wird, wodurch eine Rückfederungswirkung vermieden wird, wobei der von der ersten Gruppe von Profilwalzen (26) geschaffene Stoßfängerträger (8) allmählich durch die Krümmungsprofilwalzen (30, 54, 56, 58) der zweiten Gruppe von Profilwalzen (27) hindurch läuft,
wobei die Profilwalzen (27) der zweiten Gruppe nacheinander in der Linie hinter den Profilwalzen (26) der ersten Gruppe ausgerichtet sind und Walzenebenen aufweisen, durch welche die Basisebene des Stoßfängerträgers (8) hindurch läuft, die in Positionen bezüglich der horizontalen Linie progressiv nach oben oder nach unten angeordnet ist.

2. Vorrichtung nach Anspruch 1, wobei jede der Profilwalzen der ersten und zweiten Gruppe von Profilwalzen (26, 27) aufweist:
ein Stützteil (62, 64); und
ein oberes Walzenteil (70, 70', 70'', 70''') und ein unteres Walzenteil (72, 72', 72'', 72'''), die beide von dem Stützteil (62, 64) abgestützt werden.

3. Vorrichtung nach Anspruch 2, wobei jede der Profilwalzen ferner ein Höheneinstellteil (74) aufweist, welches an dem Stützteil (62, 64) vorgesehen ist, um die Höhe des oberen Walzenteils (70, 70', 70'', 70''') einzustellen.

4. Vorrichtung nach Anspruch 2 oder 3, wobei jede Verlängerungslinie (L1, L2, L3), die jede Drehachse der oberen Walzenteile (70', 70'', 70''') mit der entsprechenden Drehachse der unteren Walzenteile (72', 72'', 72''') der Profilwalzen (27) der zweiten Gruppe verbindet, in eine Vorrückrichtung des Stoßfängerträgermaterials bezüglich einer vertikalen Linie (V) geneigt ist.

5. Vorrichtung nach Anspruch 4, wobei die geneigten Verlängerungslinien (L1, L2, L3) und die vertikalen Linien (V) mit zunehmend größeren Winkeln (α1, α2, α3) zu der Vorrückrichtung des Stoßfängerträgermaterials zusammentreffen.

6. Vorrichtung nach Anspruch 1, wobei die Endkrümmungsprofilwalze (30) ein Stützteil (82), eine erste und zweite untere Walze (84, 86), die an dem Stützteil (82) montiert ist, und eine obere Walze (88) aufweist, die über der ersten und zweiten unteren Walze (84, 86) in einer Mittelposition dazwischen angeordnet ist.

7. Vorrichtung nach Anspruch 6, wobei die Endkrümmungsprofilwalze (30) eine Walzenebene aufweist, die höher als die der letzten Profilwalze (58) des ersten Abschnitts (28) der zweiten Gruppe positioniert ist.

8. Vorrichtung nach Anspruch 6, wobei die Endkrümmungsprofilwalze (30) derart angeordnet ist, dass eine Ebene zwischen der oberen Walze (88) und den unteren Walzen (84, 86) höher als die zwischen dem oberen Walzenteil (70', 70'', 70''') und dem unteren Walzenteil (72', 72'', 72''') der profilwalzen des ersten Abschnitts (28) der zweiten Gruppe ausgebildet ist.

9. Vorrichtung nach Anspruch 6, wobei sich eine Verlängerungslinie (L4), die eine Drehachse der oberen Walze (88) und einen Mittelpunkt an einem Segment der Drehachse der ersten und zweiten unteren Walze (84, 86) miteinander verbindet, bezüglich einer vertikalen Linie (V) in die Vorrückrichtung des Stoßfängerträgermaterials neigt.

10. Vorrichtung nach Anspruch 3, wobei die Stützteile (62, 64) Mittelabschnitte aufweisen, die zu dessen Boden hohl sind, und ein oberes und unteres Achsstützteil (66, 68) mit diesen unter Verwendung einer Schwalbenschwanzmethode zum Abstützen des oberen und unteren Walzenteils (70, 72) verbunden sind, so dass sich das obere Achsstützteil (66) mittels des Höheneinstellteils (74) nach oben und unten bewegt.

11. Vorrichtung nach Anspruch 1, wobei die Walzenebenen der Profilwalzen (27) der zweiten Gruppe jeweils vorbestimmte Winkel bezüglich der horizontalen Ebene haben.

12. Vorrichtung nach Anspruch 11, wobei die vorbestimmten Winkel progressiv nach oben ansteigend sind.

13. Vorrichtung nach Anspruch 11, wobei die vorbestimmten Winkel progressiv nach unten ansteigend sind.

14. Vorrichtung nach Anspruch 1, wobei die Profilwalzen (26, 27) der ersten und zweiten Gruppe von derselben Antriebsquelle (90) angetrieben werden.

15. Vorrichtung nach Anspruch 1, ferner aufweisend eine Abwickelhaspel (20), einen Strecker (22) zum Glätten des Stahlblechs, das von der Abwickelhaspel (20) abgerollt wird, und eine Bremspresse (24) zum Formen verschiedener Löcher in dem Stahlblech, das von dem Strecker (22) ausgerichtet ist, wobei die verschiedenen Löcher für den Zusammenbau einer fertigen Stoßfängeranordnung (2) erforderlich sind.

16. Vorrichtung nach Anspruch 15, ferner aufweisend ein Formeinstellelement (32) zum Einstellen einer Kontur und Krümmung des Stoßfängerträgers zu einer erforderlichen Endform.

17. Vorrichtung nach Anspruch 16, wobei das Formeinstellelement (32) ein unteres Formwerkzeug (98), das eine Einstellöffnung (96) aufweist, die im Wesentlichen einer Form einer Vorderwand des Stoßfängerträgers (8) entspricht, und ein oberes Formwerkzeug (102) aufweist, das eine Einstellöffnung aufweist, die im Wesentlichen einer Form der Rückund Innenwand des Stoßfängerträgers (8) entspricht, und das mit dem unteren Formwerkzeug (98) fest verbunden ist.

18. Vorrichtung nach Anspruch 16, ferner aufweisend eine Schweißvorrichtung (34) zum Schweißen von Flanschen (110, 112) an eine Vorderwand des Stoßfängerträgermaterials (18), die von dem Formeinstellelement (32) geschaffen wird.

19. Vorrichtung nach Anspruch 18, ferner aufweisend eine Schneidvorrichtung (36) zum Schneiden des Stoßfängerträgermaterials (18) auf eine vorbestimmte Länge.

20. Verfahren zur Herstellung eines Kraftfahrzeug-Stoßfängerträgers (8) mit einem Stahlblech mit Seitenrändern, aufweisend die Schritte:
a) Biegen des Stahlblechs allmählich, um eine einstückige Rohrform zu bilden, wobei die Seitenränder an dessen Vorderwand mittels Durchlaufen des Stahlblechs durch eine erste Gruppe von Profilwalzen (26) hindurch angelegt werden;
b) Formen einer vorbestimmten Krümmung des einstückigen Rohres mittels Durchlaufen des Rohres durch einen ersten Abschnitt (28) einer zweiten Gruppe von Profilwalzen (27) hindurch; und
c) Formen einer Endkrümmung des einstückigen Rohres mittels Durchlaufen des Rohres, das von dem ersten Abschnitt (28) der zweiten Gruppe von Profilwalzen (27) gekrümmt ist, durch einen zweiten Abschnitt der zweiten Gruppe von Profilwalzen (27) hindurch,
wobei die Walzenebenen der zweiten Gruppe von Profilwalzen (27) jeweils vorbestimmte Winkel bezüglich der horizontalen Ebene haben, wobei die Walzenebenen durch den vertieften Mittelabschnitt des Rohres hindurchlaufen und die vorbestimmten Winkel progressiv positiv oder negativ ansteigen.

21. Verfahren nach Anspruch 20, ferner aufweisend den Schritt:
c) Einstellen der Form des Rohres auf die tatsächliche Abmessung des Stoßfängerträgers (8) mittels Hindurchlaufen des von dem Schritt b) gesendeten Rohres durch ein Formwerkzeug (98, 102) mit einem hohlen Abschnitt (100) hindurch, wobei der hohle Abschnitt eine Querschnittsform hat, die im Wesentlichen der Querschnittsform des Stoßfängerträgers (8) entspricht.

22. Verfahren nach Anspruch 21, ferner aufweisend die Schritte:
d) Schweißen der Seitenränder an die Vorderwand des Rohres; und
e) Schneiden des von dem Schritt d) gesendeten Rohres.

23. Verfahren nach Anspruch 22, ferner aufweisend den Schritt des Schweißens der Seitenränder an die Vorderwand des Rohres aufwärts der zweiten Gruppe von Profilwalzen (27).

24. Verfahren nach Anspruch 20, wobei die Endkrümmung des einstückigen Rohres eine Krümmung hat, die geringer als die der vorbestimmten Krümmung des einstückigen Rohres ist.

25. Verfahren nach Anspruch 20, wobei das einstückige Rohr aufweist:
eine obere Kammer (14), die von einer Vorder-, oberen, oberen Rück- und oberen Innenwand (146, 122, 118, 114) durch Anlegen eines oberen Flansches (110) gebildet wird, der sich von der oberen Innenwand (114) mit einem im Wesentlichen rechten Winkel zu der Vorderwand (146) erstreckt; und
eine untere Kammer (16), die von einer Vorder-, Boden-, unteren Rück- und unteren Innenwand (146, 124, 120, 116) durch Anlegen eines unteren Flansches (112) gebildet wird, der sich von der unteren Innenwand (116) mit einem im Wesentlichen rechten Winkel zu der Vorderwand (146) in die entgegengesetzte Richtung des oberen Flansches (110) erstreckt.

## Revendications

1. Dispositif permettant de fabriquer une poutre de pare-choc pour véhicule (8) ayant une forme de tube intégral en vue en coupe et une base plane, ledit dispositif comprenant :
un premier groupe de formeurs à galets (26) pour former la forme de tube intégrale, en vue en coupe, de la poutre de pare-choc (8), ledit premier groupe de formeurs à galets (26) étant doté d'une pluralité de formeurs à galets (38, 40, 42, 44, 46, 48, 50, 52) à travers lesquels un matériau pour poutre de pare-choc (18) passe successivement, lesdits formeurs à galets (26) du premier groupe étant successivement alignés sur une ligne et ayant des plans de rouleau, à travers lesquels le plan de base de la poutre de pare-choc (8) passe, disposée sur une ligne horizontale identique ; et
un second groupe de formeurs à galets (27) ayant une première partie (28) avec une pluralité de rouleaux de courbure (54, 56, 58) pour former une courbure prédéterminée dudit tube intégral, et une seconde partie avec un rouleau de courbure final (30) pour former une courbure finale dudit tube intégral courbé par les formeurs à galets (54, 56, 58) de ladite première partie (28) du second groupe des formeurs à galets (27), moyennant quoi l'on évite l'effet de retour élastique, ladite poutre de pare-choc (8) provenant du premier groupe de formeurs à galets (26) qui passe successivement à travers lesdits rouleaux de courbure (30, 54, 56, 58) dudit second groupe de formeurs à galets (27), lesdits formeurs à galets (27) du second groupe étant successivement alignés sur la ligne située derrière les formeurs à galets (26) du premier groupe et ayant des plans de rouleau, à travers lesquels le plan de base de la poutre de pare-choc (8) passe, disposée progressivement vers le haut ou vers le bas en positions par rapport à la ligne horizontale.

2. Dispositif selon la revendication 1, dans lequel chacun des formeurs à galets des premier et second groupes de formeurs à galets (26, 27) comprend :
un élément de support (62, 64) ; et
un élément de galet supérieur (70, 70', 70", 70''') et un élément de galet inférieur (72, 72', 72", 72''') les deux étant supportés par l'élément de support (62, 64).

3. Dispositif selon la revendication 2, dans lequel chacun des formeurs à galets comprend en outre un élément de réglage de la hauteur (74) qui est prévu sur l'élément de support (62, 64) pour régler la hauteur de l'élément de galet supérieur (70, 70', 70", 70''').

4. Dispositif selon la revendication 2 ou 3, dans lequel chaque ligne d'extension (L1, L2, L3) qui raccorde chaque axe rotatif des éléments de galet supérieur (70', 70", 70"') à l'axe rotatif correspondant des éléments de galet inférieur (72', 72", 72"') des formeurs à galets (27) du second groupe, est réorientée vers une direction d'avancement du matériau de la poutre de pare-choc par rapport à une ligne verticale (V).

5. Dispositif selon la revendication 4, dans lequel les lignes d'extension réorientée (L1, L2, L3) et les lignes verticales (V) rencontrent à des angles progressivement supérieurs (α1, α2, α3) la direction d'avancement du matériau de la poutre de pare-choc.

6. Dispositif selon la revendication 1, dans lequel le rouleau de courbure final (30) comprend un élément de support (82), des premier et second galets inférieurs (84, 86) montés sur l'élément de support (82), et un galet supérieur (88) agencé sur les premier et second galets inférieurs (84, 86) à une position centrale entre eux.

7. Dispositif selon la revendication 6, dans lequel le rouleau de courbure final (30) a un plan de rouleau positionné plus haut que celui du dernier formeur à galets (58) de la première partie (28) du second groupe.

8. Dispositif selon la revendication 6, dans lequel le rouleau de courbure final (30) est disposé de sorte qu'un plan entre le galet supérieur (88) et les galets inférieurs (84, 86) est plus haut que celui qui existe entre l'élément de galet supérieur (70', 70", 70''') et l'élément de galet inférieur (72', 72", 72"') des formeurs à galets de la première partie (28) du second groupe.

9. Dispositif selon la revendication 6, dans lequel une ligne d'extension (L4) qui raccorde un axe rotatif du galet supérieur (88) et un point central sur un segment des axes de rotation des premier et second galets inférieurs (84, 86) est réorientée par rapport à une ligne verticale (V) vers la direction d'avancement du matériau de poutre de pare-choc.

10. Dispositif selon la revendication 3, dans lequel les éléments de support (62, 64) ont des parties centrales creuses au niveau d'un fond de celles-ci, et les éléments de support d'essieu supérieur et inférieur (66, 68) qui sont fixés sur celles-ci en utilisant un procédé de queue d'aronde pour supporter les éléments de galet supérieur et inférieur (70, 72) de sorte que l'élément de support de l'essieu supérieur (66) se déplace de haut en bas grâce à l'élément de réglage de la hauteur (74).

11. Dispositif selon la revendication 1, dans lequel les plans de rouleau des formeurs à galets (27) du second groupe ont respectivement des angles prédéterminés par rapport au plan horizontal.

12. Dispositif selon la revendication 11, dans lequel les angles prédéterminés augmentent progressivement vers le haut.

13. Dispositif selon la revendication 11, dans lequel les angles prédéterminés augmentent progressivement vers le bas.

14. Dispositif selon la revendication 1, dans lequel les formeurs à galets (26, 27) des premier et second groupes sont entraînés par la même source d'entraînement (90).

15. Dispositif selon la revendication 1 comprenant en outre une dérouleuse (20), un redresseur (22) pour aplatir la tôle d'acier déroulée par la dérouleuse (20) et une presse à frein (24) pour former les différents trous sur la tôle d'acier dirigée à partir du redresseur (22), les différents trous étant nécessaires lors de l'assemblage d'un ensemble de pare-choc fini.

16. Dispositif selon la revendication 15 comprenant en outre un dispositif de réglage (32) de forme pour ajuster un contour et la courbure de la poutre de pare-choc dans une forme requise définitive.

17. Dispositif selon la revendication 16, dans lequel le dispositif de réglage de forme (32) comprend un moule inférieur (98) doté d'un trou de réglage (96) qui correspond sensiblement à une forme d'une paroi avant de la poutre de pare-choc (18), et un moule supérieur (102) doté d'un trou de réglage qui correspond sensiblement à une forme des parois arrière et interne de la poutre de pare-choc (8), raccordé fixement au moule inférieur (98).

18. Dispositif selon la revendication 16 comprenant en outre un dispositif de soudage (34) pour souder des rebords (110, 112) à une paroi avant du matériau de poutre de pare-choc (18) prévu à partir du dispositif de réglage de forme (32).

19. Dispositif selon la revendication 18 comprenant en outre un dispositif de coupe (36) pour couper le matériau de la poutre de pare-choc (18) à une longueur prédéterminée.

20. Procédé permettant de fabriquer une poutre de pare-choc pour véhicule (8) avec une tôle d'acier dotée de bords latéraux, comprenant les étapes consistant à :
a) plier progressivement la tôle d'acier pour former une forme de tube intégral avec les bords latéraux qui viennent en butée sur la paroi avant de celle-ci en faisant passer la tôle d'acier à travers un premier groupe de formeurs à galet (26);
b) former une courbure prédéterminée dudit tube intégral en faisant passer ledit tube à travers une première partie (28) d'un second groupe de formeurs à galets (27) ; et
c) former une courbure finale dudit tube intégral en faisant passer ledit tube courbé par ladite première partie (28) du second groupe de formeurs à galets (27) à travers une seconde partie du second groupe de formeurs à galets (27),
les plans de galet dudit second groupe de formeurs à galet (27) ont respectivement des angles prédéterminés par rapport au plan horizontal, lesdits plans de galet étant traversés par la partie centrale dentée du tube et lesdits angles prédéterminés augmentant progressivement en positif ou en négatif.

21. Procédé selon la revendication 20 comprenant en outre l'étape consistant à :
c) ajuster la forme du tube à la dimension réelle de la poutre de pare-choc (8) en faisant passer le tube suite à l'étape b), à travers un moule (98, 102) doté d'une partie creuse (100), ladite partie creuse ayant une forme transversale qui correspond sensiblement à la forme transversale de la poutre de pare-choc (8).

22. Procédé selon la revendication 21 comprenant en outre les étapes consistant à :
d) souder lesdits bords latéraux à ladite paroi avant du tube ; et
e) couper le tube après l'étape d).

23. Procédé selon la revendication 22 comprenant en outre l'étape consistant à souder lesdits bords latéraux à ladite paroi avant du tube en amont dudit second groupe des formeurs à galet (27).

24. Procédé selon la revendication 20, dans lequel la courbure finale dudit tube intégral a une courbure inférieure à celle de ladite courbure prédéterminée dudit tube intégral.

25. Procédé selon la revendication 20, dans lequel le tube intégral comprend :
une chambre supérieure (14) qui est définie par des parois avant, de dessus, arrière supérieure, et interne supérieure (146, 122, 118, 114) en venant en butée contre un rebord supérieur (110) qui s'étend à partir de la paroi interne supérieure (114) avec un angle sensiblement droit par rapport à la paroi avant (146) ; et
une chambre inférieure (16) qui est définie par des parois avant, de fond, arrière inférieure et interne inférieure (146, 124, 120, 116) en venant en butée contre un rebord inférieur (112) qui s'étend à partir de la paroi interne inférieure (116) avec un angle sensiblement droit par rapport à la paroi avant (146) dans la direction opposée du rebord supérieur (110).
